# EUROPÄISCHE PATENTSCHRIFT

(11) **EP 4 173 809 B1**
(45) Veröffentlichungstag und Bekanntmachung des Hinweises auf die Patenterteilung: **25.02.2026**
(21) Anmeldenummer: 22200548.0
(22) Anmeldetag: 10.10.2022
(51) Int. Cl.: B29C 73/16

(54) **PANNENHILFESET UMFASSEND EINE MESSEINRICHTUNG MIT DRUCKABLASSEINRICHTUNG UND VERFAHREN ZUR REGULIERUNG DER DRUCKLUFT IN EINEM FAHRZEUGREIFEN MIT EINEM PANNENHILFESET**
PUNCTURE AID SET COMPRISING A MEASURING DEVICE WITH A PRESSURE RELEASE DEVICE AND METHOD FOR REGULATING THE COMPRESSED AIR IN A VEHICLE TYRE WITH A PUNCTURE AID SET
ENSEMBLE D'AIDE À LA CREVAISON COMPRENANT UN DISPOSITIF DE MESURE AVEC DÉCHARGE DE PRESSION ET PROCÉDÉ DE RÉGULATION DE L'AIR COMPRIMÉ DANS UN PNEU DE VÉHICULE À L'AIDE D'UN ENSEMBLE D'AIDE À LA PANSE

(30) Priorität: 19.10.2021 DE 102021211787
(43) Veröffentlichungstag der Anmeldung: 03.05.2023
(73) Patentinhaber: Continental Reifen Deutschland GmbH, 30175 Hannover (DE)
(72) Erfinder: Schlosser, Florian, 30165 Hannover (DE); Detering, Rainer, 30165 Hannover (DE)
(74) Vertreter: Continental Corporation

(56) Entgegenhaltungen:
- JP-A- 2007 076 104
- US-A1- 2010 108 187
- US-A1- 2011 290 372
- US-B2- 10 150 266
- US-B2- 7 926 521

## Beschreibung

Die Erfindung betrifft ein Pannenhilfeset mit einer Messeinheit und einer Druckablasseinrichtung gemäß dem Oberbegriff des Patentanspruchs 1 sowie die Verwendung eines solchen gemäß dem Oberbegriff des Patentanspruchs 7. Ferner betrifft die Erfindung ein Verfahren zur Regulierung der Druckluft in einem Fahrzeugreifen mit einem Pannenhilfeset gemäß dem Oberbegriff des Patentanspruchs 8.

Pannenhilfesets oder Pannenhilfekits mit einer Messeinheit sind im Stand der Technik bekannt und werden üblicherweise eingesetzt, um das Pannenhilfeset über einen Schlauch mit dem Fahrzeugreifen beziehungsweise dem Ventil des Reifens zu verbinden. Ein Pannenhilfeset umfasst üblicherweise einen Kompressor zur Erzeugung von Druckluft, durch die ein Dichtmittel zum Abdichten eines Fahrzeugreifens im Falle einer Panne in den Fahrzeugreifen gepumpt wird und/oder den Fahrzeugreifen nach dem Abdichten mit Luft zu befüllen.

Ablassventile in Pannenhilfesets sind beispielsweise aus der EP3383630 bekannt. Ein solches Pannenhilfeset weist ein manuell betätigbares Druckablassventil zur Verringerung des Reifendrucks auf, wobei das Druckablassventil so ausgebildet ist, dass bei angeschlossenem Dichtmittelbehälter und/oder während der Förderung von Dichtmittel aus dem Dichtmittelbehälter in den Reifen eine Betätigung bzw. ein Ablassen des Drucks verhindert ist. Die US 7926521 B2 offenbart eine Vorrichtung zum Einspritzen von Dichtmittel und ein Verfahren zum Einspritzen von Dichtmitteln, die zum Einspritzen eines Dichtmittels zum Abdichten eines durchlöcherten Luftreifens in den Luftreifen verwendet werden. Weiterer Stand der Technik ist in der US 2010/108187 A1, der US 10150266 B2 und der US 2011/290372 A1 offenbart.

Derzeitige Entwicklungen von Pannenhilfesets führen zu immer kleineren Bauteilen, weshalb funktionelle Elemente, wie beispielsweise ein Ablassventil, am Pannenhilfeset mit anderen Elementen zusammengeführt oder anders angeordnet werden müssen, wobei die Funktionsfähigkeit des Pannenhilfesets für den Verbraucher weiterhin gegeben sein sollte.

Hier setzt die vorliegende Erfindung an. Es ist die Aufgabe der Erfindung ein verbessertes Pannenhilfeset bereitzustellen, durch das die Benutzung für den Benutzer vereinfacht wird und welches insbesondere in Bezug auf die Druckluftregulierung verbessert wird.

Die Aufgabe der vorliegenden Erfindung wird durch ein Pannenhilfeset zum Abdichten und Aufpumpen von Fahrzeugreifen mit den Merkmalen des Patentanspruchs 1. Ferner wird die Aufgabe der vorliegenden Erfindung durch ein Verfahren zur Regulierung der Druckluft in einem Fahrzeugreifen mit einem Pannenhilfeset mit den Merkmalen des Patentanspruchs 8 gelöst.

Gelöst wird die Aufgabe durch ein Pannenhilfeset zum Abdichten und Aufpumpen von Fahrzeugreifen, umfassend einen Kompressor zum Erzeugen von Druckluft, wobei das Pannenhilfeset mindestens eine Messeinrichtung zur Erfassung und zum Anzeigen des physikalischen Druckes eines Mediums aufweist, wobei die Messeinrichtung mindestens eine Druckablasseinrichtung zur Regulierung des Luftdrucks aufweist, dadurch gekennzeichnet, dass die Druckablasseinrichtung mindestens ein Abdichtelement aufweist, welches an einem Luftkanal angeordnet ist, welcher mit einem Druckmesser der Messeinrichtung verbunden ist und sich in den Bereich des zu messenden Luftstroms erstreckt, wobei das Abdichtelement in einen geöffneten Zustand zum Ablassen der Luft oder in einen geschlossenen Zustand verschiebbar ist.

Vorteilhafterweise kann das erfindungsgemäße Pannenhilfe umfassend eine Messeinrichtung mit mindestens einer Druckablasseinrichtung zur Regulierung des Luftdrucks kostengünstiger hergestellt werden. Ein solches Pannenhilfeset ist durch die Kombination der Messeinrichtung mit der Druckablasseinrichtung deutlich platzsparender, wodurch die Fertigung des Pannenhilfesets vereinfacht wird. Ferner wird die Bedienbarkeit für den Benutzer verbessert, da die Druckluftregulierung direkt abgelesen und reguliert werden kann. Üblicherweise wird ein Manometer als Messeinrichtung verwendet, wobei andere Messeinrichtungen denkbar sind.

In einer bevorzugten Ausführungsform der Erfindung ist die Druckablasseinrichtung in die Messeinrichtung integriert. Die integrierte Druckablasseinrichtung ist somit kein einzelnes Bauteil, sondern mit der Messeinrichtung unmittelbar oder mittelbar verbunden. Vorteilhafterweise kann ein Pannenhilfeset mit einer in die Messeinrichtung integrierten Druckablasseinrichtung platzsparender hergestellt werden, wodurch die Sets kleiner und kostengünstiger herstellbar sind.

Erfindungsgemäß weist die Druckablasseinrichtung mindestens ein Abdichtelement auf, welches an einem Luftkanal angeordnet ist, welcher mit einem Druckmesser der Messeinrichtung verbunden ist und sich in den Bereich des zu messenden Luftstroms erstreckt. Der Bereich des zu messenden Luftstroms ist üblicherweise ein Bereich in einem Schlauch oder in einem Kanal, durch welcher Luft strömt. Dieser weist eine Öffnung auf, durch sich der Luftkanal erstreckt. Durch den Luftkanal ström die Luft bis zum Druckmesser, indem der Luftdruck gemessen wird. Der Luftkanal kann besonders bevorzugt als Rohr ausgebildet sein. Vorteilhafterweise ist das Abdichtelement so ausgebildet, dass über ein solches die Druckluft reguliert werden kann, sodass der Benutzer den Druck individuell einstellen kann.

Erfindungsgemäß ist das Abdichtelement verschiebbar. Besonders bevorzugt ist das Abdichtelement dabei so verschiebbar, dass ein geöffneter Zustand zum Ablassen der Druckluft oder ein geschlossener Zustand entsteht. In einer besonders bevorzugten Ausführungsform ist das Abdichtelement mit dem Luftkanal verbunden und verschiebbar, indem der Druckmesser manuell durch einen Benutzer heruntergedrückt wird. Das Abdichtelement ist besonders bevorzugt im Druckluftbereich angeordnet und verschließt die Öffnung dieses Bereiches. Vorteilhafterweise kann das Abdichtelement in den Bereich der Luftströmung verschoben werden.

Ferner bevorzugt ist das Abdichtelement durch eine Feder verschließbar. Die Feder ist in einer solchen Ausführungsform im Bereich der Luftströmung angeordnet und presst das Abdichtelement von innen gegen die Außenwand des Bereiches durch welche sich der Luftkanal erstreckt, sodass das Abdichtelement die Öffnung verschließt. Bei Benutzung wird das Abdichtelement gegen die Feder heruntergedrückt, wodurch die Öffnung frei wird und Luftdruck frei wird. Wenn der Druck durch einen Benutzer nachlässt, verschließt das Abdichtelement die Öffnung durch die Feder wieder. Vorteilhafterweise ist der Vorgang der Regulierung der Druckluft somit beliebig oft wiederholbar und einfach zu bedienen.

In einer weiteren bevorzugten Ausführungsform der Erfindung ist das Abdichtelement im Bereich des zu messenden Luftstroms angeordnet. Das Abdichtelement ist vorteilhafterweise im Strömungskanal angeordnet, da der Öffnungs- und Schließmechanismus der Messeinrichtung zum Regulieren der Druckluft für den Benutzer vereinfacht wird.

Ferner bevorzugt eist das Abdichtelement ringförmig ausgebildet. Das Abdichtelement ist in einer solchen bevorzugten Ausführungsform der Form der Öffnung angepasst. Üblicherweise erstreckt sich die Öffnung um den Luftkanal kreisförmig, wobei das Abdichtelement die Öffnung verschließt. In einer besonders bevorzugten Ausführung ist das ringförmige Abdichtelement scheibenförmig. Andere Formen sind ebenfalls denkbar.

In einer weiteren bevorzugten Ausführungsform der Erfindung ist die Messeinrichtung so ausgebildet, dass die Druckablasseinrichtung geöffnet wird, indem ein Benutzer manuellen Druck auf die Messeinrichtung ausübt, und sich die Druckablasseinrichtung insbesondere wieder schließt, wenn der manuelle Druck durch den Benutzer nachlässt. Ein wesentlicher Vorteil für den Benutzer ist, dass die Messeinrichtung einfach zu bedienen ist und der Luftdruck im Fahrzeugreifen einfach regulierbar ist.

Ferner betrifft die Erfindung eine Verwendung eines beschriebenen Pannenhilfesets zum Abdichten und Aufpumpen von Fahrzeugreifen. Insbesondere bezieht sich die Verwendung auf die Regulierung des Luftdrucks eines Fahrzeugreifens durch das beschriebene Pannenhilfeset. Vorteilhafterweise kann der Benutzer den Luftdruck im Fahrzeugreifen einfacher durch die Verwendung des erfindungsgemäßen Pannenhilfesets regulieren.

Die Aufgabe der Erfindung wird außerdem durch ein Verfahren zur Regulierung der Druckluft in einem Fahrzeugreifen mit einem Pannenhilfeset gelöst, insbesondere mit einem beschriebenen Pannenhilfeset, wobei die Regulierung der Druckluft in einem Fahrzeugreifen über eine Messeeinrichtung mit integrierter Druckablasseinrichtung erfolgt.

Vorteilhafterweise erfolgt die Regulierung des Luftdrucks über eine Kombination von Messeinrichtung und integrierter Druckablasseinrichtung für den Benutzer deutlich einfacher, da dieser Den Luftdruck ablesen und gleichzeitig regulieren kann. Außerdem ist ein kombiniertes Bauteil deutlich platzsparender, sodass das Pannenhilfeset kostengünstiger herstellbar ist.

In einer bevorzugten Ausführung der Erfindung erfolgt die Regulierung des Luftdrucks in folgenden Schritten:
- Ablesen des Luftdrucks mit Hilfe eine Druckanzeige in der Messeinrichtung und
- Regulieren des Luftdrucks durch Aufbringen eines manuellen Drucks auf die Messeinrichtung, wodurch die Luftablasseinrichtung geöffnet wird.

Weitere Vorteile und Merkmale des erfindungsgemäßen Pannenhilfesets sowie des Verfahrens ergeben sich nebst der Beschreibung zusätzlich aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche, auch wenn sich die Unteransprüche nicht aufeinander beziehen oder wenn diese verschiedenen Anspruchskategorien zugehören. Ferner sind auch Kombinationen von bevorzugten und besonders bevorzugten Ausführungsformen untereinander miteinander kombinierbar. Dies gilt auch für die einzelnen Merkmale des nachfolgenden diskutierten Ausführungsbeispiels, soweit dies nicht für den Fachmann als zwingend zueinander gehörig erkennbar sind.

### Figurenbeschreibung

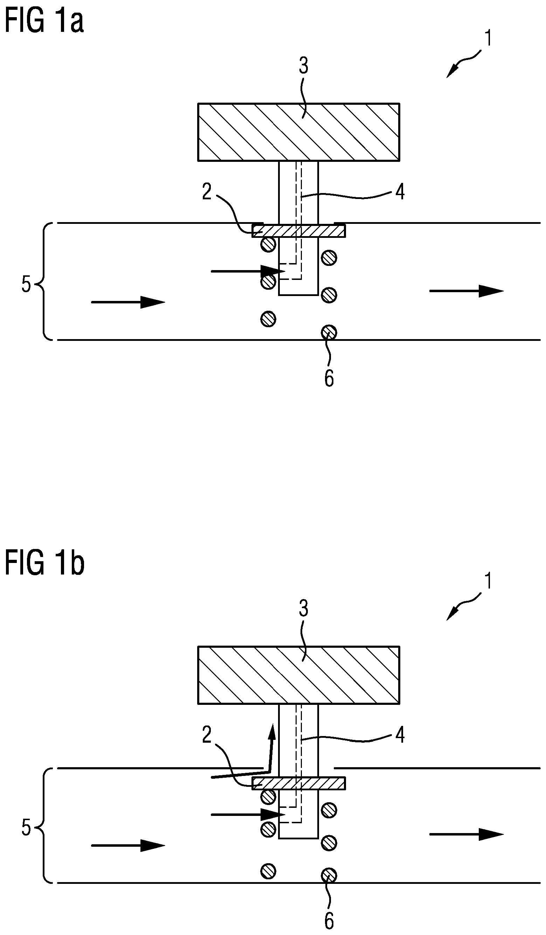

Weitere Einzelheiten und Vorteile der vorliegenden Erfindung ergeben sich aus der nachfolgenden Beschreibung des Ausführungsführungsbeispiels in Verbindung mit den Zeichnungen. In diesen zeigen
- Figur 1a: eine Ausführungsform des erfindungsgemäßen Pannenhilfesets mit einem Manometer im geschlossenen Zustand
und
- Figur 1b: dieselbe Ausführungsform des erfindungsgemäßen Pannenhilfesets mit einem Manometer im geöffneten Zustand.

Figur 1a zeigt eine Ausführungsform des erfindungsgemäßen Pannenhilfesets umfassend ein Manometer 1 mit einem integriertem Druckablassventil mit einem Abdichtelement 2 im geschlossenen Zustand. Das Manometer 1 umfasst einen Druckmesser 3 und einen Luftkanal 4, der in den Bereich der Luftströmung 5 hineinragt. Der Druckmesser 3 ist außerhalb des Bereiches der Luftströmung 5 angeordnet. Ein Abdichtelement des Druckablassventils 2 ist als eine Scheibe ausgebildet und wird durch eine Feder 6 im geschlossenen Zustand gehalten. Der Luftdruck wird vom Manometer 1 angezeigt, indem Luft im Bereich der Luftströmung 5 über den Luftkanal 4 in den Druckmesser 3 strömt. Der Benutzer kann den Luftdruck regulieren, indem er auf den Druckmesser 3 manuellen Druck ausübt und gegen die Feder 6 drückt. Dabei öffnet sich das Abdichtelement des Druckablassventils 2. Figur 1b zeigt dieselbe Ausführungsform des erfindungsgemäßen Pannenhilfesets im geöffneten Zustand. Wenn der manuelle Druck durch den Benutzer wieder nachlässt, schließt sich das Abdichtelement des Druckablassventils 2 wieder.

### Bezugszeichenliste:

- 1: Manometer
- 2: Abdichtelement des Druckablassventils
- 3: Druckmesser
- 4: Luftkanal
- 5: Bereich der Luftströmung
- 6: Feder

## Patentansprüche

1. Pannenhilfeset zum Abdichten und Aufpumpen von Fahrzeugreifen, umfassend einen Kompressor zum Erzeugen von Druckluft, wobei das Pannenhilfeset mindestens eine Messeinrichtung (1) zur Erfassung und zum Anzeigen des physikalischen Druckes eines Mediums aufweist,
wobei die Messeinrichtung (1) mindestens eine Druckablasseinrichtung zur Regulierung des Luftdrucks aufweist,
**dadurch gekennzeichnet, dass** die Druckablasseinrichtung mindestens ein Abdichtelement (2) aufweist, welches an einem Luftkanal angeordnet ist, welcher mit einem Druckmesser (3) der Messeinrichtung (1) verbunden ist und sich in den Bereich des zu messenden Luftstroms erstreckt, wobei das Abdichtelement (2) in einen geöffneten Zustand zum Ablassen der Luft oder in einen geschlossenen Zustand verschiebbar ist.

2. Pannenhilfeset nach Anspruch 1, **dadurch gekennzeichnet, dass** das Druckablasseinrichtung (2) in die Messeinrichtung (1) integriert ist.

3. Pannenhilfeset nach einem der vorherigen Ansprüche, **dadurch gekennzeichnet, dass** das Abdichtelement (2) durch eine Feder verschließbar ist.

4. Pannenhilfeset nach einem der vorherigen Ansprüche, **dadurch gekennzeichnet, dass** das Abdichtelement (2) im Bereich des zu messenden Luftstroms angeordnet ist.

5. Pannenhilfeset nach einem der vorherigen Ansprüche, **dadurch gekennzeichnet, dass** das Abdichtelement (2) ringförmig ausgebildet ist, insbesondere scheibenförmig.

6. Pannenhilfeset nach einem der vorherigen Ansprüche, **dadurch gekennzeichnet, dass** die Messeinrichtung so ausgebildet ist, dass die Druckablasseinrichtung, insbesondere das Abdichtelement (2) des Druckablassventils, geöffnet wird, indem ein Benutzer manuellen Druck auf die Messeinrichtung (1) ausübt, und sich die Druckablasseinrichtung oder das Abdichtelement (2) des Druckablassventils, insbesondere wieder schließt, wenn der manuelle Druck durch den Benutzer nachlässt.

7. Verwendung eines Pannenhilfesets nach einem der vorherigen Ansprüche zum Abdichten und Aufpumpen von Fahrzeugreifen.

8. Verfahren zur Regulierung der Druckluft in einem Fahrzeugreifen mit einem Pannenhilfeset nach einem der Ansprüche 1 bis 6, **dadurch gekennzeichnet, dass** die Regulierung der Druckluft in einem Fahrzeugreifen über eine Messeeinrichtung (1) mit integrierter Druckablasseinrichtung (2) erfolgt.

## Claims

1. Puncture repair kit for sealing and inflating vehicle tyres, comprising a compressor for generating compressed air, wherein the puncture repair kit has at least one measuring device (1) for detecting and for displaying the physical pressure of a medium,
wherein the measuring device (1) has at least one pressure release device for adjusting the air pressure,
**characterized in that** the pressure release device has at least one sealing element (2) that is disposed on an air duct which is connected to a pressure gauge (3) of the measuring device (1) and extends into the region of the air flow to be measured, wherein the sealing element (2) can be displaced to an open state for releasing the air or to a closed state.

2. Puncture repair kit according to Claim 1, **characterized in that** the pressure release device (2) is integrated into the measuring device (1).

3. Puncture repair kit according to one of the preceding claims, **characterized in that** the sealing element (2) is able to be closed by a spring.

4. Puncture repair kit according to one of the preceding claims, **characterized in that** the sealing element (2) is disposed in the region of the air flow to be measured.

5. Puncture repair kit according to one of the preceding claims, **characterized in that** the sealing element (2) is of an annular, in particular disc-shaped, design.

6. Puncture repair kit according to one of the preceding claims, **characterized in that** the measuring device is designed in such a way that the pressure release device, in particular the sealing element (2) of the pressure release valve, is opened by a user exerting manual pressure on the measuring device (1), and the pressure release device, or the sealing element (2) of the pressure release valve, in particular closes again when the manual pressure exerted by the user is reduced.

7. Use of a puncture repair kit according to one of the preceding claims for sealing and inflating vehicle tyres.

8. Method for adjusting the compressed air in a vehicle tyre with a puncture repair kit according to one of Claims 1 to 6, **characterized in that** the adjustment of the compressed air in a vehicle tyre is performed by way of a measuring device (1) with an integrated pressure release device (2).

## Revendications

1. Ensemble de dépannage destiné à étanchéifier et à gonfler des pneumatiques de véhicule, comprenant un compresseur pour générer de l'air comprimé, l'ensemble de dépannage comportant au moins un dispositif de mesure (1) destiné à détecter et à afficher la pression physique d'un milieu,
le dispositif de mesure (1) comportant au moins un dispositif d'évacuation de pression destiné à réguler la pression de l'air,
**caractérisé en ce que** le dispositif d'évacuation de pression comporte au moins un élément d'étanchéité (2), qui est disposé sur un conduit d'air, lequel est relié à un manomètre (3) du dispositif de mesure (1) et s'étend dans la zone du flux d'air à mesurer, l'élément d'étanchéité (2) pouvant être coulissé dans un état ouvert pour évacuer l'air ou dans un état fermé.

2. Ensemble de dépannage selon la revendication 1, **caractérisé en ce que** le dispositif d'évacuation de pression (2) est intégré dans le dispositif de mesure (1).

3. Ensemble de dépannage selon l'une des revendications précédentes, **caractérisé en ce que** l'élément d'étanchéité (2) peut être fermé par un ressort.

4. Ensemble de dépannage selon l'une des revendications précédentes, **caractérisé en ce que** l'élément d'étanchéité (2) est disposé dans la zone du flux d'air à mesurer.

5. Ensemble de dépannage selon l'une des revendications précédentes, **caractérisé en ce que** l'élément d'étanchéité (2) présente une forme annulaire, en particulier une forme de disque.

6. Ensemble de dépannage selon l'une des revendications précédentes, **caractérisé en ce que** le dispositif de mesure est réalisé de telle sorte que le dispositif d'évacuation de pression, en particulier l'élément d'étanchéité (2) de la vanne d'évacuation de pression, est ouvert **en ce qu'**un utilisateur exerce une pression manuelle sur le dispositif de mesure (1) et le dispositif d'évacuation de pression ou l'élément d'étanchéité (2) de la vanne d'évacuation de pression se referme à nouveau en particulier lorsque la pression manuelle exercée par l'utilisateur diminue.

7. Utilisation d'un ensemble de dépannage selon l'une des revendications précédentes pour étanchéifier et gonfler des pneumatiques de véhicule.

8. Procédé de régulation de l'air comprimé dans un pneumatique de véhicule avec un ensemble de dépannage selon l'une des revendications 1 à 6, **caractérisé en ce que** la régulation de l'air comprimé dans un pneumatique de véhicule est effectuée par un dispositif de mesure (1) avec un dispositif d'évacuation de pression (2) intégré.
